# EUROPEAN PATENT SPECIFICATION

(11) **EP 3 362 025 B1**
(45) Date of publication and mention of the grant of the patent: **19.06.2019**
(21) Application number: 16790680.9
(22) Date of filing: 17.10.2016
(51) Int. Cl.: A61H 19/00, A41D 19/01, A41D 19/00, A61H 7/00, A61H 15/00

(54) **MASSAGE MITTS**
MASSAGEHANDSCHUHE
GANTS DE MASSAGE

(30) Priority: 16.10.2015 GB 201518388
(43) Date of publication of application: 22.08.2018
(73) Proprietor: Soma Therapies Ltd, Blackpool, Lancashire FY2 9JX (GB)
(72) Inventor: WHITTLE, Sandra, Blackpool Lancashire FY2 9JX (GB)
(74) Representative: Hutchinson, Thomas Owen
(86) International application number: PCT/GB2016/053206
(87) International publication number: WO 2017/064516

(56) References cited:
- WO-A1-83/02217
- WO-A1-98/51171
- JP-A- H09 103 458
- US-A- 5 768 709
- US-A1- 2002 010 957
- US-A1- 2013 245 366

## Description

This invention relates to massage mitts, and in particular, but without limitation, to massage mitts suitable for use in the treatment of the human or animal body by medical practitioners.

More particularly, this invention relates to massage mitts suitable for use as therapeutic massage tools for clinicians interested in treatment modalities that influence deep and superficial fascia in manual therapies in both humans and animals.

The physiological and/or psychological benefits of massage in the treatment of the human or animal body cannot be underestimated. Generally speaking, massage involves applying pressure to affected or injured areas with the objectives of increasing increase blood flow, loosening and stretching soft tissues, manipulating joints etc. which can lead to therapeutic benefits including reducing pain, healing injury and promoting wellbeing generally. Massage is also gaining popularity as an alternative therapy in the treatment of chronic pain.

Massage generally involves the application of pressure and the rubbing of soft tissues to alleviate pain and discomfort and to promote healing. The precise mechanisms by which massage is effective is the subject of ongoing debate, although it is generally accepted that applying pressure and rubbing soft tissues increases blood flow to the affected area thereby promoting healing. Furthermore, rubbing soft tissues can alleviate tension and improve the suppleness of the affected part, thereby promoting healing through natural movements subsequent to treatment.

Massage therapy falls under the umbrella of manual therapy. Massage therapy is widely used in healthcare and wellness professions involving manipulation of soft tissue.

It is believed that massage techniques induce numerous chemical reactions within the body and many benefits of massage derive from the effect on the connective tissue. Massage techniques involve different ways in which load is applied to the skin which consequently manipulates the connective tissues beneath.

A physiotherapist that treats many patients in any given day needs to pay a great deal of attention to ergonomics to ensure that his or her hands do not become injured through repetitive strain injuries, and to reduce the likelihood of injury to the therapist, they are trained to adopt specific hand positions when applying pressure to the patient's skin to ensure that their own hands do not become injured during the procedure. In particular, it is necessary for the therapist to maintain, as far as possible, a neutral hand position at all times and not to unduly bend their fingers, thumbs or palms into unnatural positions whilst applying pressure or when rubbing the patient's skin. However, most massage treatments involve the application of pressure using different parts of the therapist's hands and so it is not always possible to adopt neutral hand positions at all times during a treatment session.

Furthermore, the effectiveness of massage therapies tends to vary considerably from patient to patient - with some patients benefiting enormously from the treatment, and others less so. In many cases, it is the therapist's technique this is most important, and this is borne out empirically due to the same patient receiving substantially the same treatment from different therapists, but often benefiting to different degrees.

There is, therefore, some inconsistency in the effectiveness of massage treatments, which, through no fault of the patient or therapist, depends on a range of factors largely outside the patient's, and/or the therapist's control.

A need therefore exists for a product which improves the effectiveness of massage, and/or which helps to prevent injury to the therapist, and/or which provides more consistent and efficacious results.

To this end, a wide range of massage tools are already available on the market, which can be used by therapists in the application of massage therapy. For example, it is possible to buy a range of largely handheld devices, which comprise rounded parts, nodules, rollers, etc., which can be used by the therapist during a treatment session to concentrate the force applied by the therapist to particular areas of the patient's body. Whilst these tools may be more effective at applying appropriate pressure to the affected body part than the therapist's hands, they generally require the therapist to adopt an unnatural hand position whilst holding the tool, which can in itself lead to repetitive strain injuries to the therapist over extended periods of time.

Other known massage gloves are described in US5768709 [Newkirk, 23 June 1998]; JPH09103458 [Toshiba, 22 April 1997]; and in US 2013/245366 [Rhodes, 19 September 2013].

This invention aims to provide a solution to one or more of the above problems, and/or to provide an alternative tool for in massage therapy.

Various aspects of the invention are set forth in the appended claims.

According to one aspect of the invention, there is provided a massage mitt (10) comprising: a main body portion comprising a hollow interior volume whose shape and dimensions correspond to that of a user's hand, the main body portion comprising: a convex upper surface portion (14) adapted, in use, to overlie the back of the user's hand; and a concave lower surface portion (12) adapted, in use, to overlie the palm of the user's hand; the exterior of the mitt (10) comprising a plurality of nodules (24, 28, 32), and wherein the mitt (10) further comprises: reinforcing elements (50, 52, 54, 58) adapted, in use, to maintain, in use, the user's hand in a neutral, ergonomic position, the reinforcing elements being: a first integrally formed reinforcing element (54) comprising a region of increased thickness formed on an interior surface of the concave lower portion of the mitt (12), which extends from a wrist region (56) onto the concave lower surface portion (12), and a second region of increased thickness (50) formed along the outside of the trapezium-metacarpal region of the user's thumb.

The massage mitt may further comprise a thumb portion extending from the main body portion defining a second hollow interior portion for receiving, in use, the thumb of the user's hand.

By providing a massage mitt that naturally tends to adopt a neutral hand position, the user's hand, when wearing the mitt, is encouraged to adopt the neutral hand position. By encouraging a neutral hand position, this may reduce or alleviate the incidence of repetitive strain injuries to a user of the mitt.

The provision of the reinforcing elements biases the mitt in such a way that it naturally adopts a neutral hand position.

Further, the provision of the plurality of nodules on the exterior surfaces of the mitt suitably facilitates the effective application of pressure to the patient's skin, as shall be described below.

As previously explained, massage therapy involves the application of mechanical forces; and connective tissue is responsive to mechanical forces. Most massage techniques affect the consistency of the ground substance and directional pattern of the fibre configuration and network within the connective tissue. The gel of the ground substance within the connective tissue is considered thixotropic, which means that it liquefies when agitated and returns to a gel state as it stands.

It is believed that the nodules on the massage mitt of the invention enhance the loading of mechanical forces on the connective tissue, increasing the modification of the intercellular matrix of the tissues - ground substance by altering the hyaluronic acid production effecting connective tissue viscosity and stiffness. Soft tissue mobilisations seem to soften the ground substance and increase the water-binding capacity, which makes the tissue more pliable which in turn increases massage efficiency and effectiveness. In theory, the massage mitt of the invention may also make an excellent tool for beauty therapist involved with cellulite reduction treatments, but this has not yet been investigated.

The massage mitt of the invention can be used for massage methods described using one or a combination of five types of mechanical forces on the body to achieve a therapeutic benefit. The five kinds of force that can affect body tissue are compression, tension, bending, shear and torsion, specifically:
compression forces occur when two structures are pressed together. As massage load moves into the tissue layers, compressive force is created;
tension forces occur when ends of a structure are pulled in opposite directions. Tension force is used during massage with applications that drag, glide, lengthen, and stretch tissue;
bending forces are a combination of compression and tension. One side of the structure is exposed to compressive forces as the other side is exposed to tension forces. Bending occurs during many massage applications. Force is applied across fibre or across the direction of the muscles, tensions or ligaments, and fascial sheaths;
shear forces are a sliding force, and significant friction is often created between the structures that slide against each other; and
torsion forces are best understood as twisting forces. Massage introduces torsion forces through application of methods that knead and twist soft tissue.

There are seven alterations in application that can modify the intensity of the mechanical force on the soft tissue, connective tissue, namely:
depth of pressure (compressive force), which can be light, moderate, deep, or variable;
drag, which is the amount of pull (stretch) on the tissue (tensile force). Lubricants can be used during massage to increase slip and therefor reduce drag;
rhythm refers to the regularity of application of the massage technique being applied;
frequency, which is the rate at which the method repeats itself within a given time frame technique;
duration, being the length of time a technique is applied at a specific location;
speed, that is to say, how slow or fast a method is applied. Massaging with the invention may reduce the time needed to obtain the required result from the massage technique; and
massage methods, such as holding, compression, gliding, stroking, kneading, lifting, percussion, vibration, oscillation, friction plus Movement and mobilisation.

The ergonomic shape of the massage mitt of the invention, and in particular, the nodules' positioning, increases the tactile surface area of the therapist's hands on the skin when applying soft tissue and massage techniques. The nodules also tend to increase the oscillating effect on the fascia, but the exact effects on how this influences the intercellular matrix of the tissue is under investigation.

The massage mitt of the invention can be used with a variation of pressure, duration and direction of tissue loading to initiate various responses via the skin, superficial fascia, adipose tissue, deeper fascia and interstitial myofascial tissue. Recent research evaluates the effects of different manual therapies for various painful conditions by means of direct tissue manipulations, degrees of pressure and types of applied tissue loading to stimulate the nervous system and how they may influence circulation and other neurological and biomechanical responses of the body.

It is established knowledge that the circulatory changes from massage and other soft tissue mobilisations encourage increased localised blood flow to the area, increase cell nutrients, and stimulate lymph by various soft tissue mobilisation supply and drainage techniques. Cellular changes by mechanotranduction result can from change in cell shape in response to altered load of the fascia (increased or decreased) with potential beneficial effects on inflammatory processes.

Fascia is considered to comprise of various collagen structures. Collagen deposition can be modified by the application of manual therapies that apply compression, friction and shear force to the superficial and deep fascial structures influencing fascia density and function.

Manual therapy techniques may modulate sympathetic tone to enhance the autonomic system's balance by stimulating various chemical reactions in the body that would potentially reduce fascial stiffness. Various research articles confirm initial responses but research is still ongoing. Manual therapists apply various techniques for painful conditions by means of direct tissue manipulation and reflex stimulation of the nervous system.

The mitt is suitably manufactured from an elastomeric material, such as EVA rubber or silicone. These materials are preferred over alternatives, such as latex, as they are less likely to trigger allergic reactions in the patient or therapist. They are also compatible with many massage lubricants, such as oil, water and oil in water. By manufacturing the mitt from EVA rubber or silicone, it can be readily cleaned and/or sterilised using water, chemicals or surfactants that are already readily available in the therapist's workplace. Furthermore, by manufacturing the mitt from an elastomeric material, it is supple, thus permitting the user to bend his/her hand, fingers and/or thumb whilst wearing the mitt.

Suitably, the mitt is manufactured from a material having a Shore hardness of between 25A to 45A (e.g. 25A 30A 40A and 45A), although a Shore hardness of around 35A has been found to be particularly efficacious because it provides sufficient hardness to enable the therapist to receive tactile feedback, as well as enabling the therapist to apply sufficient pressure to obtain a therapeutic effect. Surprisingly, it has been found that manufacturing the mitt from a material with a Shore hardness of 35A yields a mitt that provides exceptional massage of deep tissue and fascia, and this is believed to occur due to such a material's ability to transmit just the right amount of force from the therapist's fingers/thumbs/hands to the body's tissues to stimulate blood flow, and to disrupt the fascia sufficiently to give rise to a marked improvement in the efficacy of the device. Also, oscillations set-up during stroking/rubbing actions, when a mitt with a Shore hardness of 35A is used, are also believed to contribute significantly to compound movements of bending, twisting, vibration techniques used in massage and other manual therapy techniques used in connective manipulation, neuromuscular mobilisations and myofascial release.

In a preferred embodiment of the invention, the mitt is unitary, for example, manufactured via an injection moulding, or via a dip-moulding process over a form, or by 3D printing or other similar additive manufacturing techniques.

The main body portion comprises a convex upper surface portion, which overlies the back of a user's hand and a concave lower surface portion, which overlies the palm of the user's hand, in use. The provision of the convex upper, and concave lower, portions of the mitt thus forms a generally dish-shaped or curved interior volume that urges the user's fingers and palm hand into a neutral position. By so doing, the user's wrist may also be urged towards a neutral position, thereby alleviating repetitive strain to the user's wrist and forearms, in use.

The mitt may also comprise a second, thumb-receiving volume, and this second volume is suitably arranged, relative to the first hollow interior volume, so as to urge the user's thumb towards a neutral position.

Thus, the overall configuration of the mitt is adapted to promote a neutral hand position whilst wearing it.

The exterior of the convex upper and concave lower portions comprise a plurality of nodules, which are suitably arranged in a pattern so as to facilitate massage various therapies. Suitably, the nodules on the mitt are strategically placed and designed to influence the sensation of touch and pressure on the skin. The nodules are suitably resiliently deformable, and in preferred embodiments of the invention, are part-spherical in shape.

In one embodiment of the invention, there are nodules overlying any one or more of: the palm region of the hand; the ball of the thumb region of the hand; the thumb tip region; and the fingernail region of the hand. Nodules may also be provided in an array covering substantially all of the convex upper and concave lower portions of the mitt.

Preferably, the nodules in any one or more of: the palm region of the hand; the ball of the thumb region of the hand; the thumb tip region; and the fingernail region of the hand are larger or more pronounced than the nodules provided on other parts of the mitt. Such a configuration suitably provides tactile feedback to the user of the mitt, in use, permitting the application of concentrated pressure via those nodules to various parts of the patient's body. Where the mitt is manufactured from a resiliently-deformable material, the user being able to feel the nodules through the mitt tends to encourage the user to apply pressure in an appropriate manner, that is to say, using the correct hand posture. Specifically, when the user's hands are not positioned in the correct hand posture, the feel of the nodules through the mitt may be somewhat odd or misaligned, thereby encouraging, unconsciously in many cases, adjustment of the hand into the correct position.

The mitt further comprises integrally formed reinforcing elements, which are adapted, in use, to bias the shape of the first and second hollow interior portions into a shape corresponding to a neutral position of the user's hand. In preferred embodiments of the invention, the reinforcing elements may comprise regions of increased thickness formed on the interior surfaces of the convex upper portion of the mitt. Suitably, the regions of increased thickness comprise regions that are 2-3 times thicker than that of the remainder of the mitt. Suitably, the reinforcing elements are provided at any one or more of the group comprising: extending from the wrist region onto the palm of the hand region; on the concave lower portion in a region corresponding to the first finger joint (i.e. across the metacarpus-phalange joints) of the user's hand; on the convex upper portion in a region corresponding to the second finger joint (i.e. across the proximal-middle phalange joints); and extending from the wrist area along the outside of the thumb (i.e. along the outside of the trapezium-metacarpal region of the user's thumb).

Preferred embodiments of the invention shall now be described, by way of example only, with reference to the accompanying drawings in which:
Figure 1 is a perspective view of the palm side of a first embodiment of a mitt in accordance with the invention;
Figure 2 is a perspective view from above of the mitt of Figure 1;
Figure 3 is a first side view of the mitt of Figure 1;
Figure 4 is a second side view of the mitt of Figure 1;
Figure 5 is a first end view of the mitt of Figure 1;
Figure 6 is a second end view of the mitt of Figure 1;
Figure 7 is a cut-away view showing the interior surface of the upper convex portion of an embodiment of a mitt in accordance with the invention;
Figure 8 is a cut-away view showing the interior surface of the lower concave portion of the mitt of Figure 7;
Figure 9 is a perspective view of the palm side of another embodiment of a pair of mitts in accordance with the invention; and
Figure 10 is a perspective view of the back-of-hand side of the mitts of Figure 9.

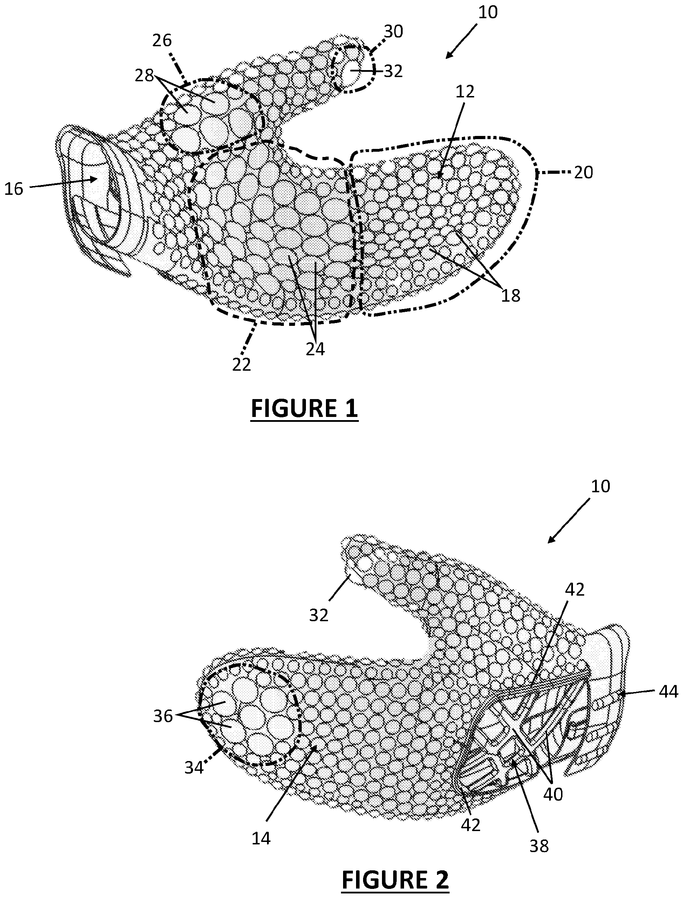

Referring to Figures 1 to 6 of the drawings, a massage mitt 10 in accordance with the invention comprises a silicone rubber mitt having a generally curved shape that corresponds to the neutral position of the user's hand, in use. The massage mitt 10 is formed as a unitary component, for example by an injection moulding process, and comprises a generally concave underside 12, which overlies, in use the palm region of the user's hand, the underside of the user's fingers and the underside of the user's thumb, in use; and a generally convex outer surface 14, which overlies the back of the user's hand, the back of the user's fingers and the outside of the user's thumb, in use. The inner 12 and outer 14 surface portions together form a hollow interior volume 16 for receiving the user's hand. A left-handed mitt 10 is shown in the drawings, but it will be appreciated that an equivalent right-handed version (being substantially a mirror-image of that shown in the drawings), is also possible and within the scope of this disclosure.

The exterior surfaces of the massage mitt 10 are covered by an array of part-spherical nodules 18 disposed in a pattern that covers substantially the entire exterior surface of the mitt 10. As can be seen from the drawings, the nodules 18 are different sizes in different regions of the mitt 10 for reasons that shall be explained below.

The smaller nodules 18 disposed in the finger region 20 of the mitt 10 are employed when applying whole-hand pressure to a patient's body, in use. For example, the therapist may place his/her hand palm down, flat on the patient's skin and exert back-and-forth strokes on the skin along with downward pressure. The nodules 18, concentrate the whole-hand pressure applied by the therapist onto smaller regions corresponding to positions of the nodules 18. This effectively increases the pressure applied to the patient's skin via the mitt 10, thereby permitting deeper penetration of the therapeutic force. Furthermore, as the palm is moved back-and-forth over the patient's skin, each part of the patient's skin receives an oscillating massage effect as the nodules successively slide over that part of the skin. By controlling the speed and pressure of the therapist's hand movements, various oscillatory massage techniques can be used to treat the affected area.

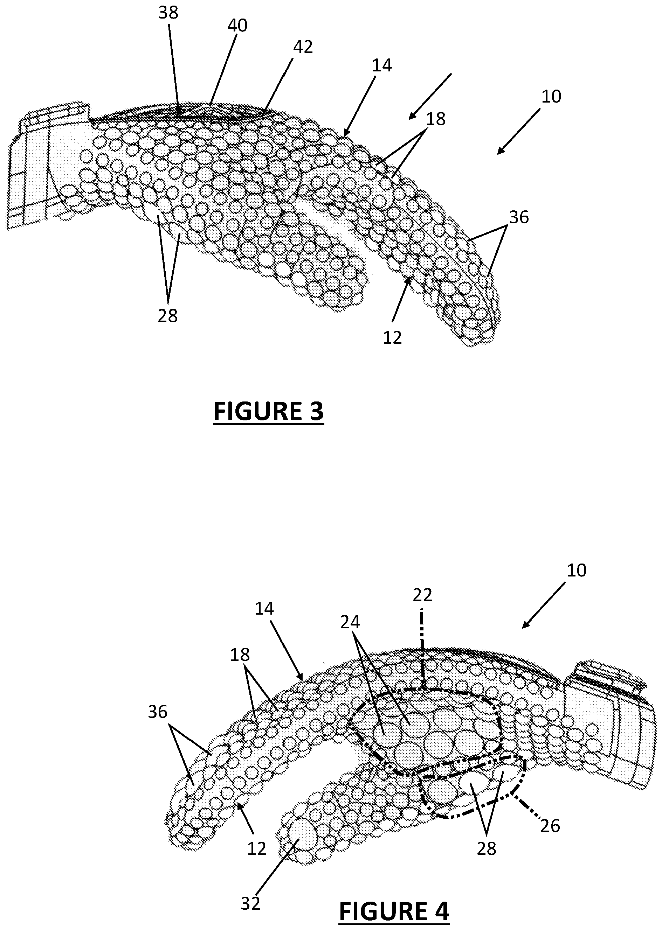

As can be seen in Figures 1 and 3 of the drawings in particular, the palm region 22 of the mitt 10 comprises a region of relatively larger nodules 24, which can be used when applying more concentrated palm massage to the patient's skin. Again, the provision of discrete nodules 24 in the palm region 22 can be used to create an oscillating massage effect when using the net. The larger nodules 24 project outwardly further from the mitt 10 than the smaller nodules 18, this distributing the force preferentially in the palm region 22 of the therapist's hand, as less so via the finger region. The locations of relatively larger 24 and relatively smaller nodules 18 can be optimised to obtain desired oscillatory massage using different hand movements. In the illustrated embodiment, a therapist's hand moved along the skin could exert a greater force via the palm region 22, followed by gentler force by the finger portion 20, thus providing a more varied therapeutic massage force.

Similarly, the heel-of-the-thumb region 26 of the mitt 10 also comprises relatively larger nodules 28, which can be used when applying more intense, deep tissue massage techniques, on a patient via the heel of the therapist's hand.

The tip of the thumb region 30 of the mitt 10 also comprises a single, relatively larger nodule 32 via which more intense, focussed or pin-pointed pressure can be applied to a patient's skin via a single point. The thumb tip nodule 32 can be felt by the user through the mitt 10, in use, and if the user's thumb tip is not correctly aligned with the nodule 32, this will create a somewhat unusual sensation in the therapist's thumb. As such, the therapist receives tactile feedback about positioning of their thumb relative to the nodule 32 within the mitt 10 and can make appropriate adjustments to his/her hand position to ensure that the thumb tip is correctly aligned with the nodule 32, thereby alleviating repetitive strain injury by adopting an incorrect hand position during the treatment. After some practice, it has been found that the iterative correction of, and the correct placement of, the hand within the mitt 10, and the correct placement of the mitt 10 on the patient's skin becomes an unconscious procedure, thus alleviating repetitive strain injury in the therapist's hands, wrists and forearms.

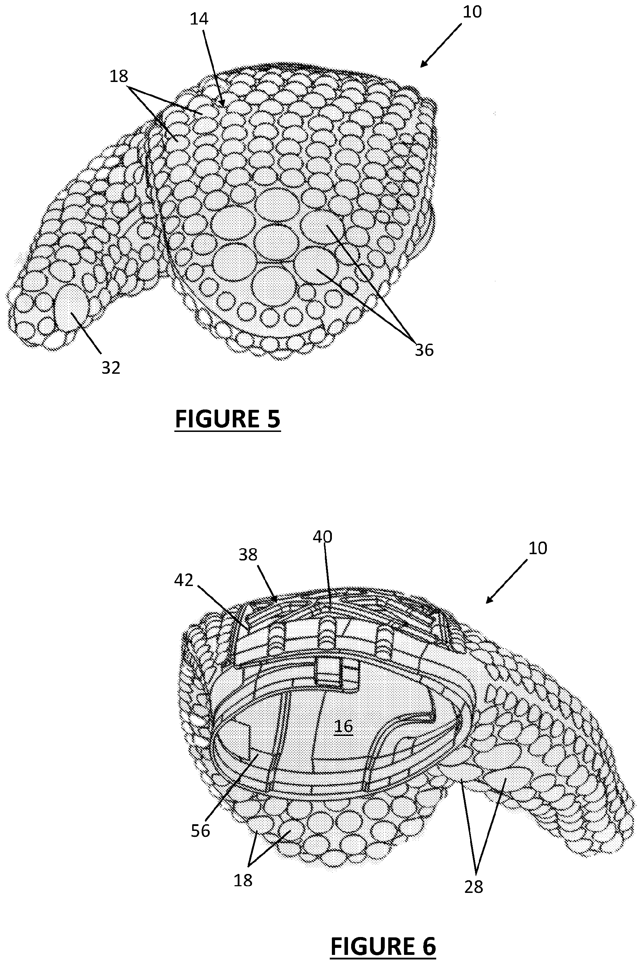

Turning now to Figures 2 and 5 of the drawings in particular, the fingernail area 34 on the top region of the mitt 10, also comprises relatively larger nodules 36, which can be employed when the user adopts a fist-type hand position during certain massage techniques. Again, the enlarged nodules 36 can be felt through the mitt 10 in use, thereby providing tactile feedback to the therapist about the position of their hand relative to the point of application of pressure.

It will be appreciated that because the therapist receives tactile feedback via the mitt 10 during the application of therapeutic pressure to the patient's skin, and due to the neutral, ergonomic "rest" shape of the mitt 10, the mitt 10 tends to continuously urge the therapist's hand towards a preferred, neutral position. Thus, the mitt 10 encourages the therapist to adopt the correct hand position during various therapeutic procedures.

Further details of the mitt 10, which are apparent from Figures 1 to 6 of the drawings, include a cut-out region 38 overlying the back of the palm region of the user's hand, in use. The purpose of this cut-out region 38 is to provide ventilation to the hand, which might otherwise become overheated as a result of being enclosed within a silicone mitt 10 for extended periods. The cut-out region 38 allows air to enter the interior of mitt 10 thereby providing a supply of air to the therapist's skin whilst wearing the mitt 10. To inhibit or prevent the unwanted deformation of the mitt 10 in use, the cut-out region 38 comprises a reticulated support structure 40, which holds the peripheries 42 of the cut-out region in a substantially fixed position. This configuration suitably prevents the massage mitt 10 from slipping or rolling relative to the user's hands, in use.

A further optional feature of the mitt 10 as shown in Figures 1 to 5 of the drawings, is a wrist closure portion 44, which comprises an adjustable strap that can be tightened and fixed around the user's wrist, in use. The provision and/or use of the wrist closure 44 is entirely optional because the mitt 10 is suitably manufactured from a resiliently deformable silicone material which can be slightly undersized, relative to the user's hand size, but which stretches with minimal force when the mitt 10 is put on the hand. Due to the resilient nature of the silicone and its low elastic modulus, fatigue can be substantially reduced or eliminated.

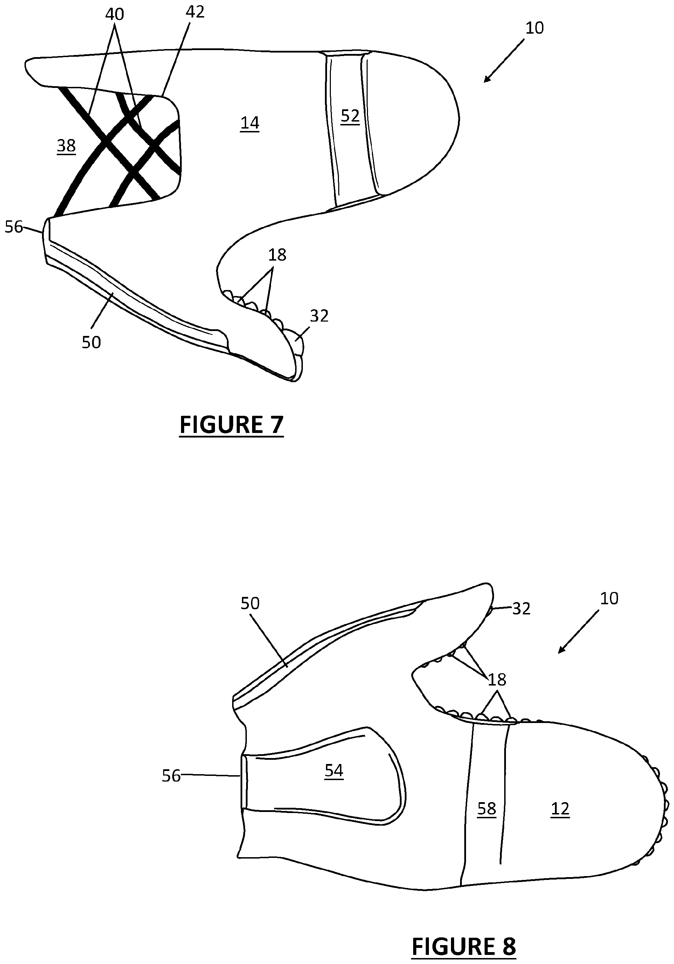

Figures 7 and 8 of the drawings show the interior of the mitt 10: Figure 7 showing the interior surface of the convex upper portion 14; and Figure 8 showing the interior surface of the concave lower portion 12.

As mentioned previously, the mitt 10 is manufactured from silicone or EVA rubber. Overall, the thickness of the rubber is relatively thin (say 0.5-1mm thick), save for the nodules, which increase the wall thickness of the silicone to approximately 4mm and 6mm for the small 18 and larger nodules 24, 28 32, 36, respectively. However, the mitt 10 further comprises integrally-formed reinforcing elements, which, in the illustrated embodiments, comprise regions of relatively thicker material, say 4mm thick (in addition to the additional thickness of any nodules in the same region) in certain regions.

In Figures 7 and 8 it can be seen that there is a region of increased thickness 50 extending along the outside edge of the user's thumb region, corresponding, in use, to the outside of the trapezium-metacarpal region of the user's thumb. This region 50 is approximately 18mm wide and approximately 105mm long and serves to urge the user's thumb to a substantially neutral position by stiffening the outside edge of the mitt 10, thereby inhibiting thumb bending, placement of the thumb over the palm, and extension of the thumb away from the palm.

In Figure 7 it can be seen that there is an optional, but preferred region of increased thickness 52 extending across the second finger joint region, that is to say, across the proximal-middle phalange joints, of the user's hand, in use. This region is approximately 18mm wide and serves to keep the second finger joints substantially coplanar during the application of therapeutic pressure.

In Figure 8 it can be seen that there is an optional, but preferred region of increased thickness 54 extending from the wrist region onto the palm of the hand region. This region 54 is approximately 30mm wide where it intersects the wrist edge 56 of the mitt 10, but widens to approximately 50mm wide some 60mm or so in from the wrist edge 56. The purpose of this reinforcing element 54 is to encourage a neutral palm shape and to inhibit curving or flattening of the palm, in use.

In Figure 8 it can also be seen that there is an optional, but preferred region of increased thickness 58 extending across the first finger joint region, that is to say, across the metacarpus-phalange joints of the user's hand. This region 58 is approximately 18mm wide and serves to keep the first finger joints substantially coplanar during the application of therapeutic pressure. This region also corresponds to the distal edge of the region 22 of larger nodules 24 on the palm of the mitt 10, thereby providing tactile feedback about the location of the region 22 of larger nodules 24 to the user.

In Figures 7 and 8 it will be noted that the wrist strap portion 44 has been omitted. It will be appreciated that the reinforcement element shown in the embodiment of Figures 7 and 8 are applied likewise to the interior surfaces of the mitt shown in Figure 1 to 6 of the drawings.

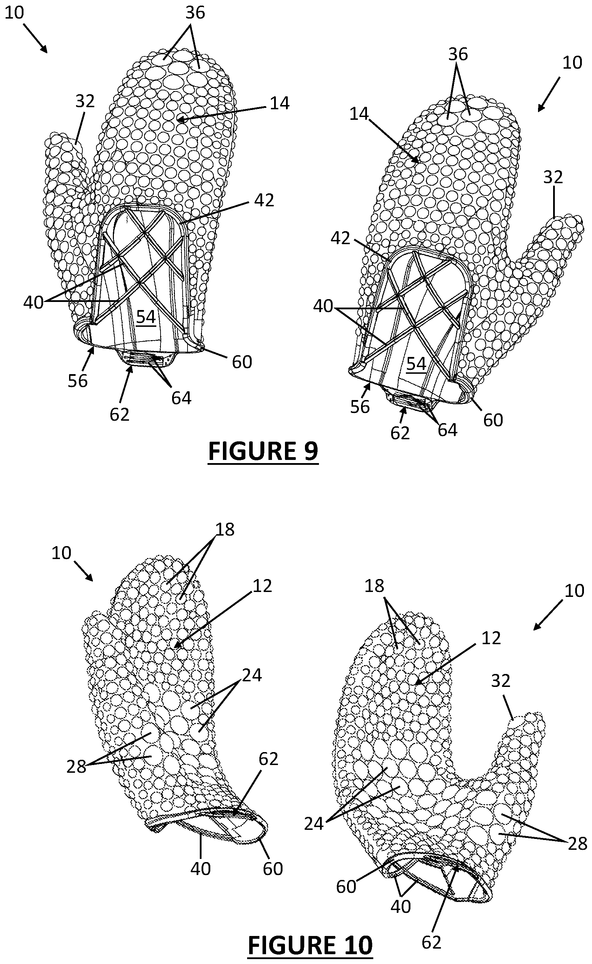

Another embodiment of the invention is shown in Figures 9 and 10 of the drawings, which show how the mitt 10 can be either left-handed or right-handed. In this embodiment of the invention, the securable cuff portion has been omitted, but otherwise, the overall configuration, placement of nodules etc. is as described previously (Identical reference signs being used to identify identical features, for clarity and consistency). This embodiment of the invention 10, the edge of the mitt 54 adjacent the wrist, in use, comprises an integral bead 60, which serves to reinforce it. A graspable tab 62 is integrally formed with the periphery 56 of the mitt 10 adjacent, in use, the user's wrist. The graspable tab 62 comprises ribbed formations 64 to facilitate pulling the mitt 10 onto the hand, with wet and/or lubricated fingers.

The mitt 10 can be used with variations of pressure, duration and direction to initiates a sensory response to the surface of the body and loads tension to the deep and superficial fascial layers and adipose tissue structure of the body, relevant for therapeutic light, moderate or deep touch and palpation.

The manually applied load of the massage mitt is intended to produce physiological response of mechanoreceptors in the skin, superficial, deep, fascia, connective tissue, adipose and interstitial myofascial tissue. Research suggests that manual therapies can alter local tissue tension via mechanotransduction.

Effects of different degrees and type of applied load have different neurological and biomechanical effects; pressure, compression, light to deep touch, slow or rapid oscillations including compound movements of bending, twisting, vibration techniques used in massage and other manual therapy techniques used in connective manipulation, neuromuscular mobilisations and myofascial release.

The massage mitt can be used in conjunction with other therapeutic techniques and manual therapies to influence superficial fascial density, function and also circulation to tissue fluids and drainage.

The invention is not restricted to the details of the foregoing embodiments, which are exemplary of the invention only. For example, the provision of relatively large and relatively small nodules, and their placement etc. is a matter of design freedom to a certain extent. The specified materials of manufacture are illustrative only and any dimensions, whether explicit or implied, are exemplary of the specific embodiments shown and are not limiting on the invention as claimed. The invention has been described in the context of therapeutic human massage, although it will be readily apparent that specific massage regimens could be developed for, and the mitt has already shown considerable promise, in the therapeutic treatment of animals, such as dogs and horses. The mitt may also be used for recreational, as opposed to medical, purposes, such as in erotic massage.

## Claims

1. A massage mitt (10) comprising:
a main body portion comprising a hollow interior volume whose shape and dimensions correspond to that of a user's hand, the main body portion comprising:
a convex upper surface portion (14) adapted, in use, to overlie the back of the user's hand; and
a concave lower surface portion (12) adapted, in use, to overlie the palm of the user's hand;
the exterior of the mitt (10) comprising a plurality of nodules (24, 28, 32), and **characterised in that** the mitt (10) further comprises:
reinforcing elements (50, 52, 54, 58) adapted, in use, to maintain, in use, the user's hand in a neutral, ergonomic position, the reinforcing elements being:
a first integrally formed reinforcing element (54) comprising a region of increased thickness formed on an interior surface of the concave lower portion of the mitt (12), which extends from a wrist region (56) onto the concave lower surface portion (12), and
a second region of increased thickness (50) formed along the outside of the trapezium-metacarpal region of the user's thumb.

2. The mitt (10) of claim 1, wherein the mitt is manufactured from a material having a Shore hardness of any one or more of the group comprising: between 25A to 45A; substantially 35A; and 35A.

3. The mitt (10) of claim 1 or claim 2, further comprising a thumb portion extending from the main body portion, the thumb portion defining a second hollow interior portion for receiving, in use, the thumb of the user's hand, the second hollow interior volume being arranged, relative to the first hollow interior volume, so as to urge the user's thumb towards the said neutral position.

4. The mitt (10) of any preceding claim, wherein the convex upper (14), and concave lower (12), portions of the mitt (10) together form a generally dish-shaped or curved interior volume that urges, in use, the user's fingers and palm into the said neutral position.

5. The mitt (10) of any preceding claim, manufactured from any one or more of the group comprising: an elastomeric material; silicone; and EVA rubber.

6. The mitt (10) of any preceding claim, wherein the nodules (24, 28, 32) are any one or more of the group comprising: resiliently deformable; part-spherical in shape; disposed in an array covering substantially the entire convex upper (14) and concave lower (12) portions of the mitt (10); arranged in an array overlying the palm region (22) of the hand; arranged in an array overlying the heel of the thumb region (26) of the hand; arranged in an array overlying the fingernail region (34) of the hand; and comprise a nodule (32) overlying the thumb tip region (30) of the hand.

7. The mitt (10) of claim 6, wherein the nodules (24, 28, 32) in any one or more of: the palm region of the hand (22); the ball of the thumb region (26) of the hand; the thumb tip region (30); and the fingernail region (34) of the hand are lager in size than the remaining nodules disposed in the array covering substantially the entire convex upper (14) and concave lower portions (12) of the mitt (10).

8. The mitt (10) of any preceding claim, further comprising a third reinforcing element being a region of increased thickness (52) formed on an interior surface of the convex upper portion (14) of the mitt (10).

9. The mitt (10) of any preceding claim, wherein the region of increased thickness (52) is formed in a region corresponding to the proximal-middle phalange joints, or to the metacarpus-phalange joints, of the user's hand.

10. The mitt (10) of any preceding claim, wherein the second region of increased thickness extending along the outside edge of the user's thumb region is approximately 18mm wide and approximately 105mm long and serves to urge the user's thumb to a substantially neutral position by stiffening the outside edge of the mitt (10), thereby inhibiting thumb bending, placement of the thumb over the palm, and extension of the thumb away from the palm.

11. The mitt (10) of any preceding claim, further comprising a cut-out region (38) overlying the back of the palm region of the user's hand, in use, the cut-out region optionally comprising a reticulated support structure (40) adapted, in use, to hold the peripheries (42) of the cut-out region (38) in a substantially fixed position.

12. The mitt (10) of any preceding claim, further comprising a wrist closure portion, and optionally an adjustable strap that can be tightened and fixed around the user's wrist, in use.

13. The mitt (10) of any preceding claim, further comprising a graspable tab (62) integrally formed with a periphery (56) of the mitt (10) adjacent, in use, the user's wrist, the graspable tab (62) optionally comprising ribbed formations (64) to facilitate pulling the mitt (10) onto the hand, with wet and/or lubricated fingers.

14. The mitt (10) of any preceding claim, wherein the mitt is manufactured from silicone rubber and is slightly undersized relative to the user's hand size.

15. The mitt (10) of any preceding claim, being any one or more of the group comprising: a left-handed mitt (10); a right-handed mitt (10); a human therapeutic massage mitt (10); a human erotic massage mitt (10); and an animal massage mitt (10).

## Patentansprüche

1. Eine Massage mitt (10) bestehend aus:
Ein Hauptkörperteil, der ein hohles Raumvolumen enthält, dessen Form und Abmessungen dem der Hand eines Benutzers entsprechen, der Hauptkörperteil besteht aus:
Ein konvexer oberer Oberflächenanteil (14), der in Gebrauch die Handrücken des Benutzers überspült; und
Ein konkave Untergrundteil (12), der in Gebrauch ist, um die Handfläche des Benutzers zu überlagern;
Das Äußere der mitt (10) besteht aus einer Vielzahl von Knötchen (24, 28, 32) und ist **dadurch gekennzeichnet, dass** die mitt (10) weiter besteht:
Die Bewehrungselemente (50, 52, 54, 58) wurden angepasst, in Gebrauch, um die Hand des Benutzers in einer neutralen, ergonomischen Position zu halten, wobei die Bewehrungselemente:
Ein erstes ganzheitlich geformtes Bewehrungselement (54), das einen Bereich mit erhöhter Dicke umfasst, der auf einer Innenfläche des konkaven unteren Teils der Mitt (12) gebildet ist, der sich von einem Handgelenksbereich (56) bis zum konkaven unteren Oberflächenanteil (12) erstreckt, und
Eine zweite größere Dickenregion (50) bildete sich entlang der Außenseite des Trapez-Metacarpal-Bereichs des Daumens des Benutzers.

2. Die Mitt (10) des Anspruchs 1, in dem die Mittle aus einem Material hergestellt wird, das eine Shore-Härte von einer oder mehreren der Gruppe hat, die zwischen 25A und 45A umfasst; Im Wesentlichen 35A; Und 35A.

3. Die mitt (10) des Anspruchs 1 oder des Anspruchs 2, der einen Daumenanteil, der sich vom Hauptkörper ausdehnt, den Daumenanteil, der einen zweiten hohlen Innenausschnitt für den Empfang des Daumens der Hand des Benutzers definiert, und das zweite Hohlvolumen Anordnen, im Verhältnis zum ersten hohlen Innenvolumen, um den Daumen des Benutzers in Richtung der besagten neutralen Position zu drängen.

4. Die Mitt (10) eines vorhergehenden Anspruchs, wobei die konvexen Ober-(14) und konkaven unteren (12), Teile der Mitt (10) zusammen ein allgemein schehr-oder geschwungenes Innenvolumen bilden, das im Gebrauch die Finger und die Handfläche des Benutzers in die besagte neutrale Position drängt.

5. Die Mitt (10) eines vorhergehenden Anspruchs, hergestellt aus einem oder mehreren der Gruppe, die aus: Ein elastomerisches Material; Silikon; Und EVA Gummi.

6. Die Mitt (10) eines vorhergehenden Anspruchs, in dem die Knötchen (24, 28, 32) eine oder mehrere der Gruppe sind, die besteht: Widerstandsfähig verformbar; Teilkugelförmig in Form; In einem Array, das im Wesentlichen die gesamte konvexe Oberseite (14) und konkave untere (12) Teile der Mitt (10) abdeckt; In einer Anordnung der Palmenregion (22) der Hand angeordnet; In einem Array, das die Ferse der Daumenregion (26) der Hand überlagert; In einem Array, das die Fingernagel-Region (34) der Hand überlagert, angeordnet; Und besteht aus einem Knötchen (32), das die Daumenspitzenregion (30) der Hand überlagert.

7. Die Mitt (10) des Anspruchs 6, wobei die Knötchen (24, 28, 32) in einem oder mehreren von: Der Palmenregion der Hand (22); Der Ball der Daumenregion (26) der Hand; Daumenspitzenbereich (30); Und die Fingernagel-Region (34) der Hand sind in der Größe als die übrigen Knötchen, die im Array entsorgt werden und im Wesentlichen die gesamten konvexen oberen (14) und konkaven unteren Portionen (12) der Mitt (10) abdecken.

8. Die mitt (10) eines vorhergehenden Anspruchs, der darüber hinaus ein drittes Verstärkungselement umfasst, ist eine Region mit erhöhter Dicke (52), die auf einer Innenfläche des konvexen oberen Teils (14) des Milz (10) gebildet wird.

9. Die Mitt (10) eines vorhergehenden Anspruchs, in dem sich die erhöhte Dicke (52) in einem Bereich bildet, der den proximal-mittleren Phalange der Gelenke entspricht, oder den Metacarpus-Phalane-Gelenken der Hand des Benutzers.

10. Die mitt (10) eines jeden vorhergehenden Anspruchs, wobei der zweite Bereich mit erhöhter Dicke, der sich entlang der Außenkante des Daumenbereichs des Benutzers erstreckt, etwa 18 mm breit und ca. 105mm lang ist und dazu dient, den Daumen des Benutzers auf eine wesentlich neutrale Position durch Versteifung der Außenkante der Mitt (10), wodurch die Daumenbiegung, die Platzierung des Daumens über der Handfläche und die Verlängerung des Daumens von der Handfläche.

11. Die mitt (10) eines vorhergehenden Anspruchs, der sich darüber hinaus aus einer Ausschnittregion (38) zusammensetzt, die die Rückseite des Palmengebietes der Hand des Benutzers überlagert, die im Einsatz ist, die Ausschnittregion, die wahlweise eine zurückhaltende Stützstruktur (40) enthält, die in Gebrauch ist, um die Peripherien zu halten (42) Der Ausschnittregion (38) in einer wesentlich festen Position.

12. Die mitt (10) eines vorhergehenden Anspruchs, der darüber hinaus einen Handgelenkverschlussteil und optional einen verstellbaren Gurt enthält, der am Handgelenk des Benutzers gestrafft und fixiert werden kann.

13. Die mitt (10) eines vorhergehenden Anspruchs, der darüber hinaus einen Greifbehälter (62) enthält, der sich vollständig mit einer Peripherie (56) der mitt (10) gebildet hat, die an das Handgelenk des Benutzers, den Greifbart (62) besteht, um das Ziehen der Rippenformationen (64) zu erleichtern. Mitt (10) auf die Hand, mit nassen and/oder geschmierten Fingern.

14. Die Mitt (10) eines vorhergehenden Anspruchs, wobei die Mittel aus Silikonkautschuk hergestellt wird und im Verhältnis zur Handgröße des Benutzers leicht unterdimensioniert ist.

15. Die Mitt (10) eines vorhergehenden Anspruchs, der eine oder mehrere der Gruppe ist, die sich aus: Ein Linkshänder (10); Eine Rechtshänder-Mitt (10); Eine menschliche therapeutische Massage mitt (10); Eine menschliche erotische Massage mitt (10); Und eine Tiermassage mitt (10).

## Revendications

1. Un gant de massage (10) comprenant:
une partie du corps principal comprenant un volume intérieur creux dont la forme et les dimensions correspondent à celle de la main de l'utilisateur, la partie principale du corps comprenant:
une partie de la surface supérieure convexe (14) adaptée, en cours d'utilisation, pour dépasser le dos de la main de l'utilisateur; et
une partie concave de la surface inférieure (12) adaptée, en cours d'utilisation, pour dépasser la paume de la main de l'utilisateur;
l'extérieur du gant (10) comprenant une pluralité de nodules (24, 28, 32) et **caractérisé en ce que** le gant (10) comprend en outre:
éléments de renfort (50, 52, 54, 58) adaptés, utilisés, pour maintenir, en usage, la main de l'utilisateur dans une position neutre et ergonomique, les éléments de renfort étant:
un premier élément de renforcement formé intégralement (54) comprenant une région d'épaisseur augmentée formée sur une surface intérieure de la partie inférieure concave du gant (12), qui s'étend d'une région du poignet (56) sur la partie concave inférieure de la surface (12), et
une deuxième région d'épaisseur augmentée (50) formée le long de l'extérieur de la région trapézoïd-métarpienne du pouce de l'utilisateur.

2. Le gant (10) de la revendication 1, dans lequel le gant est fabriqué à partir d'un matériau ayant une dureté Shore de l'un ou plusieurs des groupes comprenant: entre 25A et 45A; sensiblement 35A; et 35A.

3. Le gant (10) de la revendication 1 ou la revendication 2, comprenant une portion de pouce s'étendant de la partie principale du corps, la portion de pouce définissant une deuxième partie intérieure creuse pour recevoir, en cours d'utilisation, le pouce de la main de l'utilisateur, le deuxième volume intérieur creux étant disposés, par rapport au premier volume intérieur creux, afin d'exhorter le pouce de l'utilisateur vers ladite position neutre.

4. Le gant (10) de toute revendication précédente, dans lequel la partie supérieure convexe (14) et concave inférieure (12), portions du gant (10) forment ensemble un volume intérieur généralement en forme de plat ou incurvé qui exhorte, en cours d'utilisation, les doigts de l'utilisateur et la paume dans ladite position neutre.

5. Le gant (10) de toute revendication précédente, fabriqué à partir d'un ou plusieurs des groupes comprenant: un matériau élastomérique; silicone et le caoutchouc EVA.

6. Le gant (10) de toute revendication précédente, dans lequel les nodules (24, 28, 32) sont un ou plusieurs des groupes comprenant: élastiquement déformable; en forme de partie sphérique; disposé dans un tableau couvrant substantiellement l'ensemble de la partie supérieure convexe (14) et concave (12) parties inférieures du gant (10); disposés dans un tableau recouvrant la région de la paume (22) de la main; disposés dans un tableau recouvrant le talon de la région du pouce (26) de la main; disposés dans un tableau recouvrant la région des ongles (34) de la main; et comprennent un nodule (32) recouvrant la région de la pointe du pouce (30) de la main.

7. Le gant (10) de la revendication 6, dans lequel les nodules (24, 28, 32) dans une ou plusieurs des: la région de paume de la main (22); la boule de la région du pouce (26) de la main; la région de la pointe du pouce (30); et la région des ongles (34) de la main sont de taille Lager que les nodules restants disposés dans le tableau couvrant substantiellement la partie supérieure convexe entière (14) et les parties inférieures concaves (12) du gant (10).

8. Le gant (10) de toute revendication précédente, comprenant un troisième élément de renfort étant une région d'épaisseur augmentée (52) formée sur une surface intérieure de la partie supérieure convexe (14) du gant (10).

9. Le gant (10) de toute revendication précédente, dans lequel la région de l'épaisseur augmentée (52) est formée dans une région correspondant aux articulations de la phalange proximale-moyenne, ou aux articulations métarpe-phalange, de la main de l'utilisateur.

10. Le gant (10) de toute revendication précédente, dans laquelle la deuxième région de l'épaisseur accrue s'étendant le long du bord extérieur de la région du pouce de l'utilisateur est d'environ 18mm de large et environ 105mm de long et sert à exhorter le pouce de l'utilisateur à un substantiellement neutre position en raidissant le bord extérieur du gant (10), inhibant ainsi la flexion du pouce, le placement du pouce sur la paume, et l'extension du pouce loin de la paume.

11. Le gant (10) de toute revendication précédente, comprenant en outre une région découpée (38) recouvrant le dos de la paume de la main de l'utilisateur, en usage, la zone de découpe éventuellement constituée d'une structure de soutènement réticulé (40) adaptée, en cours d'utilisation, pour tenir les périphéries (42) de la zone de découpe (38) dans une position sensiblement fixe.

12. Le gant (10) de toute revendication précédente, comprenant une partie de fermeture du poignet, et éventuellement une sangle réglable qui peut être serrée et fixée autour du poignet de l'utilisateur, en cours d'utilisation.

13. Le gant (10) de toute revendication précédente, comprenant en outre un onglet à saisir (62) formé intégralement avec une périphérie (56) de la mitaine (10) adjacente, en cours d'utilisation, le poignet de l'utilisateur, la languette à saisir (62) en option comprenant des formations nervurées (64) pour faciliter la traction du gant (10) sur la main, avec des doigts mouillés et/ou lubrifiés.

14. Le gant (10) de toute revendication précédente, dans lequel le gant est fabriqué à partir de caoutchouc de silicone et est légèrement sous-dimensionné par rapport à la taille de la main de l'utilisateur.

15. Le gant (10) de toute revendication précédente, étant un ou plusieurs des groupes comprenant: un gant gaucher (10); un gant droitier (10); un gant de massage thérapeutique humain (10); un gant de massage érotique humain (10); et un gant de massage pour animaux (10).
